# FASCICULE DE BREVET EUROPEEN

(11) **EP 3 092 396 B1**
(45) Date de publication et mention de la délivrance du brevet: **18.09.2019**
(21) Numéro de dépôt: 14831030.3
(22) Date de dépôt: 24.12.2014
(51) Int. Cl.: F02K 3/072, F02C 7/36

(54) **DISPOSITIF DE RÉDUCTION ÉPICYCLOÏDAL POUR L'ENTRAÎNEMENT EN ROTATION DES ENSEMBLES DE PALES D'UNE TURBOMACHINE A RÉDUCTEUR**
VORRICHTUNG ZUR EPIZYKLISCHEN UNTERSETZUNG FÜR DEN ROTATIONSANTRIEB EINES SCHAUFELSATZES EINER GETRIEBETURBOMASCHINE
EPICYCLIC REDUCTION DEVICE FOR THE ROTATIONAL DRIVE OF BLADE SETS OF A GEARED TURBOMACHINE

(30) Priorité: 07.01.2014 FR 1450080
(43) Date de publication de la demande: 16.11.2016
(73) Titulaire: Safran Aircraft Engines, 75015 Paris (FR)
(72) Inventeur: CURLIER, Augustin, F-77550 Moissy-Cramayel Cedex (FR); AUSTRUY, Julien, Michel, Patrick, Christian, F-77550 Moissy-Cramayel Cedex (FR); BOUDEBIZA, Tewfik, F-77550 Moissy-Cramayel Cedex (FR); CHARIER, Gilles, Alain, F-77550 Moissy-Cramayel Cedex (FR)
(74) Mandataire: David, Alain
(86) Numéro de dépôt international: PCT/FR2014/053553
(87) Numéro de publication internationale: WO 2015/104474

(56) Documents cités:
- EP-A1- 1 857 713
- FR-A1- 2 979 121
- GB-A- 817 490
- US-A1- 2012 099 988

## Description

### Arrière-plan de l'invention

La présente invention se rapporte au domaine général des turbomachines à réducteur entraînées en rotation au moyen d'une turbine simple. Elle trouve donc application aussi bien aux turbopropulseurs d'avion à simple ou double hélice comprenant un ensemble de pales ou deux ensembles contrarotatifs de pales non carénées qu'aux turboréacteurs d'avion à simple ou double soufflante comprenant un ensemble de pales ou deux ensembles contrarotatifs de pales carénées. Elle vise plus précisément un dispositif de réduction épicycloïdal utilisé entre l'arbre du rotor de la turbine et le ou les arbres d'entraînement en rotation du ou des ensembles de pales actionnés par cette turbine.

De façon connue, un turbopropulseur d'avion à double hélice comprend deux ensembles contrarotatifs de pales non carénées. Dans certaines architectures de turbopropulseur à double hélice, les deux ensembles de pales sont entraînés directement en rotation par une turbine de puissance à deux rotors contrarotatifs. Dans d'autres architectures plus particulièrement concernées par la présente invention, les ensembles de pales sont entraînées par un même et unique rotor de la turbine de puissance. On pourra par exemple se référer au document FR2979121 qui décrit un exemple de réalisation d'une telle architecture. Le document US2012/099988 A1 présente un autre exemple de réalisation.

Les hélices contrarotatives d'un tel turbopropulseur peuvent être entraînées en rotation directement ou indirectement par l'intermédiaire d'un dispositif de transmission mécanique formant réducteur et comprenant un train épicycloïdal. Généralement, ce train épicycloïdal comporte un ensemble d'éléments roulants à dentures droites dont un planétaire qui est centré sur l'axe longitudinal du turbopropulseur et qui est relié vers l'amont au rotor de la turbine de puissance pour être entraîné par celle-ci. En aval, ce planétaire transmet en sortie son mouvement de rotation, avec une vitesse et un couple différent, sur la couronne et le porte-satellites, aux deux ensembles de pales du turbopropulseur.

Compte tenu de l'environnement mécanique dans lequel évolue le turbopropulseur, les désalignements entre les axes des arbres reliés aux différents éléments roulants du réducteur épicycloïdal se répercutent directement dans leurs dentures. Ces dentures en servant de point d'appui pour que les arbres désalignés se raccordent coaxialement, soit subissent une usure prématurée extrêmement délétère à la durée de vie du réducteur dans son ensemble soit nécessitent des épaisseurs de matière augmentées de nature à engendrer des contraintes d'intégrations très pénalisantes pour le développement d'un dispositif embarqué dont la masse et l'encombrement doivent nécessairement être minimisés.

Pour réduire de manière importante la concentration de contraintes dans les dentures droites de ce réducteur épicycloïdal, il est connu de créer une différence de raideur en flexion des arbres en entrée et en sortie du réducteur, ce qui a pour effet de réduire l'effort nécessaire pour que les extrémités de ces arbres soient coaxiales. Les désalignements éventuels entre arbres sont ainsi compensés par les souplesses sur les arbres et sont ensuite répercutés au niveau des contacts entre dentures droites des éléments roulants du réducteur épicycloïdal par le coulissement relatif de ceux-ci.

Toutefois, cette solution présente encore de nombreux inconvénients. Outre que la densité de puissance d'un tel réducteur épicycloïdal à dentures droites est assez faible, il est générateur d'un bruit important, la transmission de l'effort étant interrompue par des à-coups qui surviennent lors de la transition d'une dent à l'autre et qui génère un cliquetis métallique. De plus, des chocs mécaniques répétés opérés sur les dentures réduisent leur durée de vie.

Il existe donc un besoin non satisfait pour un réducteur épicycloïdal de turbomachine à réducteur dont la densité de puissance soit notablement augmentée.

### Objet et résumé de l'invention

La présente invention a donc pour but principal de pallier de tels inconvénients en proposant d'augmenter la tolérance au désalignement du réducteur épicycloïdal lorsque la turbomachine subit des déformations en fonctionnement tout en maintenant les degrés de liberté indispensables à ce fonctionnement. Un but de l'invention est aussi d'assurer une transition continue du contact entre les dents lors de la transmission de l'effort afin de supprimer la transmission par à-coup et les phénomènes de choc.

Ces buts sont atteints grâce à un dispositif de réduction épicycloïdal pour l'entraînement en rotation d'au moins un premier ensemble de pales d'une turbomachine, comprenant un planétaire centré sur un axe longitudinal de la turbomachine et apte à être relié à un rotor de la turbomachine pour être entraîné en rotation, au moins un satellite engrenant avec ledit planétaire, un porte-satellites portant de manière rotative ledit au moins un satellite et apte à être relié au dit premier ensemble de pales pour l'entraîner en rotation, et une couronne engrenant ledit au moins un satellite, caractérisé en ce que ledit planétaire est apte à être relié audit rotor de la turbomachine au travers d'un premier joint de transmission homocinétique à billes.

La présence à une extrémité de l'arbre planétaire d'un joint homocinétique permet de donner à l'arbre une grande souplesse mécanique en radial comme en angulaire pour lui permettre d'absorber les déformations subies en fonctionnement par la turbomachine. La tolérance au désalignement et les risques d'usure des différents éléments du réducteur épicycloïdal est ainsi renforcée.

Lorsque la turbomachine (turbopropulseur ou turboréacteur) comporte deux hélices ou soufflantes contrarotatives, ladite couronne est apte à être reliée au dit second ensemble de pales au travers d'un second joint de transmission homocinétique à billes.

Avantageusement, lesdits premier et second joints de transmission homocinétique à billes sont choisis parmi l'un des suivants : joint Rzeppa, joint Weiss, joint à pistes croisées, joint double-offset.

De préférence, ledit premier joint de transmission homocinétique à billes comprend une première extrémité munie d'une bride s'étendant radialement vers l'extérieur, et une seconde extrémité opposée à ladite première extrémité et munie d'une portion annulaire montée autour dudit planétaire par un système de cannelures. Ladite bride dudit premier joint de transmission homocinétique à billes est apte à être fixée sur un arbre d'entrainement flexible dudit rotor de turbine du turbopropulseur par l'intermédiaire d'une pluralité de liaisons boulonnées.

Avantageusement, ledit second joint de transmission homocinétique à billes comprend une première extrémité munie d'une bride s'étendant radialement vers l'extérieur, et une seconde extrémité opposée à ladite première extrémité et munie d'une bride s'étendant radialement vers l'intérieur et apte à être fixée à un arbre d'entrainement flexible dudit second ensemble de pales par l'intermédiaire d'une pluralité de liaisons boulonnées.

Il en résulte une configuration qui augmente encore davantage la faculté d'obtenir une grande souplesse en radial de l'arbre du rotor de turbine de la turbomachine.

Selon une configuration dite inversée, ledit arbre d'entrainement flexible dudit second ensemble de pales est montée à l'intérieur d'un arbre d'entrainement raide dudit premier ensemble de pales apte à être fixé au dit porte-satellites.

De façon à annuler la poussée axiale induite entre les éléments tournants du dispositif de réduction épicycloïdal, ledit planétaire, ledit au moins un satellite et ladite couronne sont dédoublés axialement et comprennent chacun des roues hélicoïdales montées en opposition (dite en double hélice).

### Brève description des dessins

D'autres caractéristiques et avantages de la présente invention ressortiront mieux de la description ci-dessous, faite en référence aux dessins annexés qui en illustrent un exemple de réalisation dépourvu de tout caractère limitatif et sur lesquels :
- la figure 1 est une vue schématique en demi-coupe longitudinale d'un turbopropulseur à double hélice muni d'un dispositif de réduction épicycloïdal conforme à l'invention ;
- la figure 2 est une vue détaillée montrant le dispositif de réduction épicycloïdal selon l'invention ; et
- la figure 3 est une vue illustrant un second mode de réalisation d'un dispositif de réduction épicycloïdal selon l'invention appliqué à un turboréacteur à réducteur à simple hélice.

### Description détaillée de l'invention

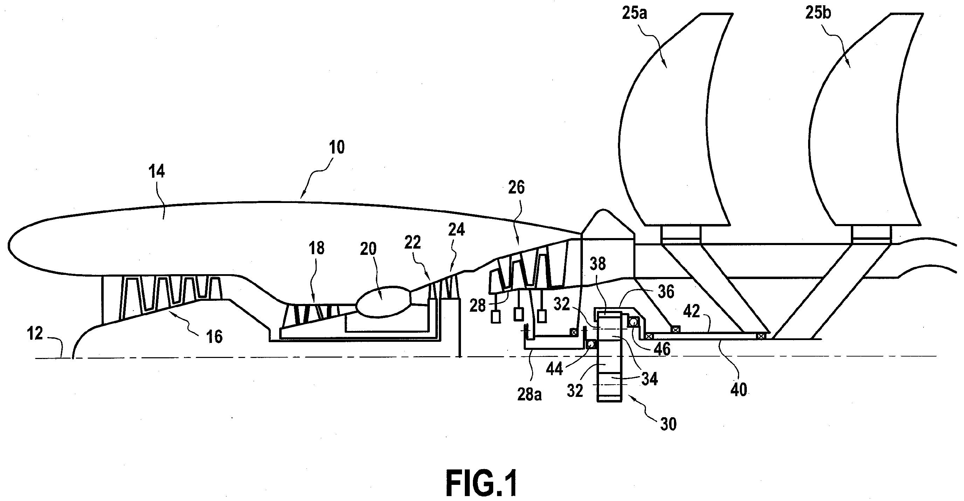

La figure 1 représente de façon très schématique un exemple de réalisation d'un turbopropulseur d'avion du type à double hélice (open rotor pusher) auquel le dispositif de réduction épicycloïdal de l'invention peut être intégré. Un tel turbopropulseur est bien connu et ne sera donc pas décrit en détail.

Le turbopropulseur 10 comprend notamment un axe longitudinal 12 et une nacelle annulaire 14 disposée coaxialement autour de cet axe longitudinal. Le turbopropulseur 10 comprend outre, d'amont en aval, un compresseur basse-pression 16, un compresseur haute-pression 18, une chambre de combustion 20, une turbine haute-pression 22 et une turbine de pression intermédiaire 24.

En aval de la turbine de pression intermédiaire 24 se trouve un système d'hélices contrarotatives, à savoir un premier ensemble (amont ou avant) 25a et un second ensemble (aval ou arrière) 25b de pales à orientation réglable, entraîné en rotation au moyen d'une turbine basse-pression 26 disposée en aval de la turbine de pression intermédiaire 24. Cette turbine basse-pression comporte notamment un rotor 28 qui entraîne en rotation les deux ensembles 25a, 25b de pales par l'intermédiaire d'un dispositif de réduction épicycloïdal 30.

Selon l'invention, ce dispositif de réduction épicycloïdal 30 comporte un planétaire 32 qui a la forme d'une roue dentée extérieurement, centré sur l'axe longitudinal 12 du turbopropulseur et solidaire vers l'amont du rotor 28 de la turbine basse-pression 26. Il comporte également au moins un satellite 34, et de préférence plusieurs (par exemple entre trois et six), chaque satellite ayant la forme d'une roue dentée extérieurement et engrenant avec le planétaire 32.

Chaque satellite 34 présente un axe qui est excentré par rapport à l'axe longitudinal 12 et est porté de manière rotative par un porte-satellites 36 centré sur l'axe longitudinal 12, ce porte-satellites étant solidaire en aval de l'ensemble amont 25a de pales de façon à pouvoir l'entraîner directement en rotation autour de l'axe longitudinal 12. Le dispositif de réduction épicycloïdal 30 comporte aussi une couronne 38 centrée sur l'axe longitudinal 12 et engrenant chaque satellite 34 par ses dentures intérieures, cette couronne étant solidaire en aval de l'ensemble aval 25b de pales de façon à pouvoir l'entraîner directement en rotation autour de l'axe longitudinal 12.

Ce réducteur épicycloïdal est dit inversé car l'arbre d'entrainement 40 de l'hélice aval en sortie de couronne est à l'intérieur de l'arbre d'entrainement 42 de l'hélice amont en sortie de porte-satellites. L'intérêt d'une telle inversion est d'avoir un couple sur l'hélice aval moins important que sur l'hélice amont afin de réduire la taille du moyeu de l'hélice aval et donc son poids. Avec cette configuration, l'hélice amont tourne à l'inverse de la turbine et l'hélice aval dans le même sens que la soufflante. Il est bien entendu possible d'avoir un train de réduction direct, le choix de la configuration, directe ou inverse (qui à son tour influencera le choix des arbres flexibles ou rigides), étant fonction des couples que l'on souhaite disponible pour chaque élément et du ressort de l'homme du métier.

Ainsi, le rotor 28 de la turbine basse-pression entraîne en rotation le planétaire 32 du dispositif de réduction épicycloïdal qui lui-même retransmet ce mouvement de rotation, par l'intermédiaire du porte-satellites 36 (via les satellites 34) et de la couronne 38, à la fois à l'ensemble amont 25a et l'ensemble aval 25b de pales pour les entraîner en rotation de façon contrarotative.

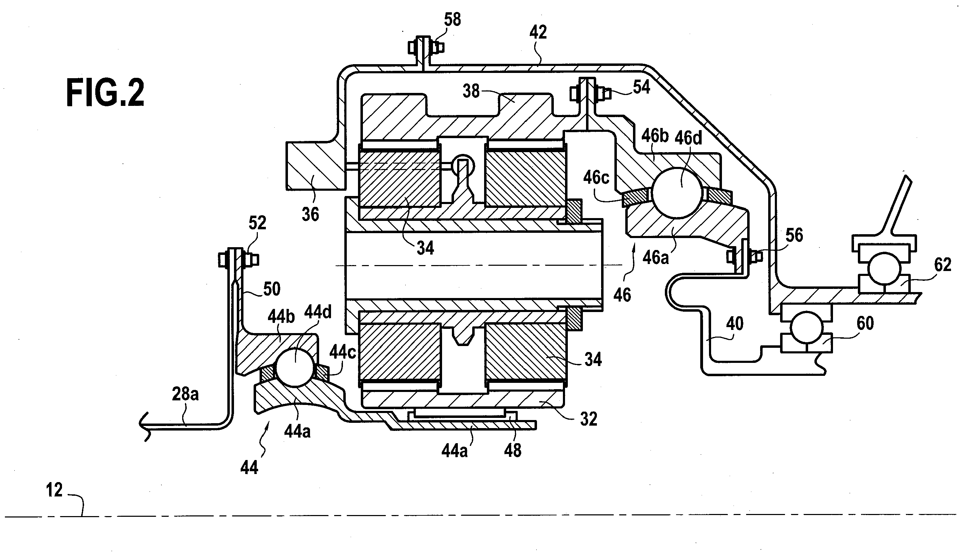

Comme représenté plus en détail sur la figure 2, le planétaire 32 est relié au rotor de façon flexible (souple en flexion) au travers d'un premier joint de transmission à billes 44 et la couronne 38 est reliée à la seconde hélice (le second ensemble aval 25b de pales) également de façon flexible au travers d'un second joint de transmission à billes 46, le porte-satellites 36 étant quant à lui relié de façon raide à la première hélice (le premier ensemble amont 25a de pales).

Plus précisément, ce premier joint de transmission à billes 44 comporte à une première extrémité, opposée à une seconde extrémité constituée d'une portion annulaire 44a montée par un système de cannelures 48 sur le planétaire 32, une bride 50 s'étendant radialement vers l'extérieur et qui est fixée sur un flasque radial d'un arbre d'entrainement flexible 28a solidaire du rotor 28 de la turbine basse-pression par l'intermédiaire d'une pluralité de liaisons boulonnées 52. Quant au second joint de transmission à billes 46, sa première extrémité est fixée à la couronne 38 par l'intermédiaire d'une pluralité de liaisons boulonnées 54 et sa seconde extrémité est fixée, également par l'intermédiaire d'une pluralité de liaisons boulonnées 56, à l'arbre d'entrainement flexible 40 solidaire du second ensemble de pales 25b. Pareillement, une pluralité de liaisons boulonnées 58 assure la fixation entre le porte-satellites 36 et l'arbre d'entrainement raide 42 solidaire du premier ensemble de pales 25a.

Ainsi, en couplant le planétaire et la couronne avec leur arbre respectif grâce à des joints de transmission homocinétique à billes permettant de limiter la concentration de contraintes dans les dentures des éléments roulants en cas de désalignement angulaire ou radial, on supprime la nécessité du degré de liberté axial au niveau des dentures (décalage axial) indispensable dans les trains épicycloïdaux à dentures droites de l'art antérieur. On notera aussi les souplesses apportées par les arbres flexibles et les deux joints de transmission à billes.

Par l'emploi de ces joints homocinétiques, on peut supprimer un degré de liberté en translation et donc recourir à des dentures hélicoïdales au lieu de dentures droites et, du fait de la continuité dans la transmission de l'effort, on augmente la densité de puissance du dispositif de réduction épicycloïdal. En pratique, le train épicycloïdal est double, avec des roues hélicoïdales montées en opposé (double hélice). De cette façon, le débattement axial entre les éléments roulants du réducteur est nul.

Les joints de transmission homocinétiques à billes sont de préférence des joints Rzeppa qui seront assemblés aux éléments roulants (planétaire ou couronne) en fonction des disponibilités que permet l'intégration dans la turbomachine. Les éléments du joint de transmission à billes (noix 44a, 46a ; bol 44b, 46b ; cage 44c, 46c et billes 44d, 46d) peuvent être intégrés directement aux éléments roulants et aux arbres ou montés séparément à l'aide des cannelures 48 pour le planétaire 32 ou de la bride boulonnée 54 pour la couronne 38 comme illustré à la figure 2.

Pour des applications de faible puissance non illustrées, on pourrait aussi envisager de verrouiller les éléments du joint de transmission via un circlip et de réaliser l'entrainement par une simple rainure, le maintien en contact entre pistes et éléments roulants pouvant alors être assuré par un simple ressort.

Il convient de noter que de tels joints de transmission homocinétique à billes sont sensibles aux mouvements axiaux relatifs de ces différents composants. En effet, un mouvement axial de la noix par rapport au bol peut avoir pour effet la perte de contact entre les billes du joint et leurs portées. Il est donc nécessaire de connaître les écarts axiaux possibles entre arbres en fonctionnement et de pré-contraindre le joint afin de conserver le contact pistes/billes dans tous les cas de chargements rencontrés. On notera que les billes qui sont maintenues dans un même plan grâce à une cage, nécessaire pour éviter que les billes ne s'échappent lors d'un écartement relatif axial des deux éléments accouplés par le joint, ne peuvent pas s'enfoncer dans les pistes, de sorte qu'une compression du joint de transmission ne pose pas de problème particulier.

On apportera une attention plus particulière au positionnement radial des deux joints de transmission 44, 46 par rapport aux paliers 60, 62 portant les arbres d'entraînement des deux hélices. En effet, si l'on raisonne en termes de désalignement purement angulaire entre l'arbre d'entrainement raide 42 (relié au porte-satellites) et un des arbres d'entrainement flexibles 28a, 40 (relié au planétaire et à la couronne), on constate que si le centre des portées des joints de transmission coïncide avec le centre de rotation de l'arbre désaligné, alors la rotation est libre et aucune contrainte de flexion n'est induite dans les arbres et dans les dentures des éléments roulants. La position de ce centre étant inconnue et variant en fonction des charges appliquées sur le moteur, il est envisageable d'approximer une position «moyenne» de manière à maximiser l'action des joints de transmission et à réduire les contraintes dans les arbres d'entrainement et dans les dentures, tout en faisant travailler les souplesses en flexion des arbres d'entrainement flexibles de la couronne et du planétaire. Ces souplesses permettent en effet de reprendre un éventuel désalignement radial entre deux de ses arbres d'entrainement dont il doit forcément répercuter une partie des contraintes liées à la flexion de ces arbres dans les dentures. En effet, il apparaît que lors du désalignement angulaire ou radial de l'arbre de turbine par rapport à l'arbre raide d'entrainement de la première hélice, la configuration géométrique du joint de transmission solidaire du planétaire va avoir une influence sur la répartition des contraintes.

Il est intéressant de remarquer qu'en cas de désalignement radial entre l'arbre raide d'entrainement de la première hélice et l'un des arbres flexibles, le dispositif va tendre à se ramener dans une configuration ou les deux arbres sont seulement désalignés angulairement, les seules contraintes nécessaires dans les dentures étant celles nécessaire à la flexion de l'arbre souple pour se ramener à cette configuration. Il est donc particulièrement intéressant de faire en sorte que les arbres flexibles soient les plus souples possibles.

Si la description qui précède a été faite en regard de joints Rzeppa, il est bien entendu possible de recourir à d'autre type de joint de transmission homocinétique à billes, comme un joint Weiss, un joint double-offset (double offset plunging joint), ou encore un joint à pistes croisées (plunging joint).

Les joints double-offset et à pistes croisées sont particulièrement intéressants car ils possèdent des pistes droites conférant un degré de liberté supplémentaire (axial) et suppriment dès lors la nécessité d'ajouter une précontrainte qui pourrait autoriser une partie des efforts de poussée à transiter par le train épicycloïdal au lieu d'être communiquée à la structure via les paliers des arbres d'entrainement, comme mentionné précédemment. En comparaison, le débattement angulaire admissible est moins important que pour un joint Rzeppa mais peut atteindre une vingtaine de degrés, ce qui en général est largement suffisant.

Plus particulièrement, pour le joint à pistes croisées dit VL, les pistes générées par des courbes sécantes sont des droites disposées comme les arêtes d'un hyperboloïde à une nappe, inclinée alternativement à droite et à gauche, au nombre de six couples. Elles sont réalisées sous forme de gorges, extérieures dans la noix et intérieures dans le bol, mises en correspondance par des billes. Du fait de la géométrie croisée des pistes, il est indispensable que la cage, qui maintient les billes entre elle, offre une liberté ortho-radiale afin de permettre à ces billes de suivre les pistes en cas de mouvement axial relatif des deux éléments accouplés.

Ainsi, l'invention permet de réduire le niveau de contrainte dans les dentures en introduisant une architecture absorbant complètement les désalignements axiaux entre arbres d'entrainement et donc entre éléments constitutifs du dispositif de réduction épicycloïdal sans générer les contraintes des systèmes de l'art antérieur.

Bien entendu, si le dispositif de réduction épicycloïdal selon l'invention a été décrit en référence au turbopropulseur de la figure 1, il convient de noter que cette même architecture est parfaitement applicable à un turboréacteur d'avion du type à double soufflante (les pales en aval étant maintenant disposées en amont). En effet, dans cette application, le planétaire 32 centré sur l'axe longitudinal 12 du turboréacteur est alors solidaire vers l'aval du rotor 28 de la turbine basse-pression 26. Les satellites 34 engrenant avec le planétaire 32 présente chacun un axe qui excentré par rapport à l'axe longitudinal 12 et sont portés de manière rotative par un porte-satellites 36 centré sur cet axe longitudinal, le porte-satellites étant solidaire en amont du premier ensemble 25a de pales de la soufflante de façon à pouvoir l'entraîner directement en rotation autour de l'axe longitudinal 12. Enfin, la couronne 38 centrée sur l'axe longitudinal 12 et engrenant chaque satellite 34 est solidaire en amont du second ensemble 25b de pales de façon à pouvoir entraîner la soufflante directement en rotation autour de l'axe longitudinal 12.

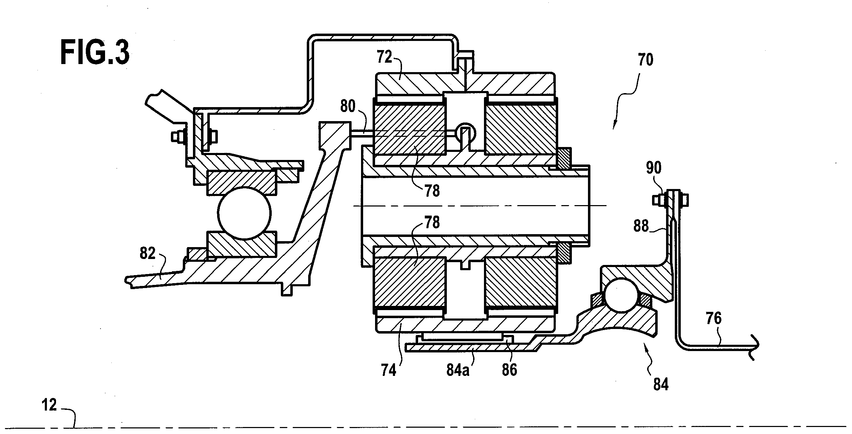

De même, si l'invention a été appliquée dans les deux modes de réalisation précédents à un réducteur agissant de façon différentielle sur deux ensembles de pales contrarotatifs, il est clair que l'on peut tout aussi bien l'appliquer, comme illustrée à la figure 3, à un réducteur agissant sur une hélice ou soufflante unique et dans lequel un des éléments du réducteur est bloqué (la problématique des contraintes dans les dentures étant la même).

En effet, dans une telle turbomachine à réducteur (turbopropulseur à hélice ou turboréacteur à soufflante), le réducteur 70 est intercalé entre le compresseur basse pression qui peut être entraîné à vitesse importante et la soufflante qui au contraire peut être entraînée à vitesse réduite. Ce réducteur 70 comporte classiquement une couronne 72 fixe, un planétaire 74 entraîné par l'arbre basse pression 76 du rotor du compresseur basse pression et des satellites 78 entraînant, via leur porte-satellites 80, l'arbre de soufflante 82 de la soufflante.

Contrairement au mode de réalisation précédent, le train épicycloïdal utilisé est un train classique et non différentiel avec une entrée, l'arbre basse pression 76, et une sortie, l'arbre de soufflante 82. Selon l'invention, l'arbre de soufflante étant raide, la souplesse est obtenue au niveau de l'arbre basse pression qui est relié au planétaire par un joint de transmission homocinétique à billes 84.

Plus précisément, ce joint de transmission homocinétique à billes 84 comporte à une extrémité amont, opposée à une extrémité aval constituée d'une portion annulaire 84a montée par un système de cannelures 86 sur le planétaire 74, une bride 88 s'étendant radialement vers l'extérieur et qui est fixée sur un flasque radial de l'arbre basse-pression 76 par l'intermédiaire d'une pluralité de liaisons boulonnées 90.

Lorsque le réducteur est à paliers lisses, le joint de transmission homocinétique à billes est avantageusement un joint Rzeppa ou Weiss pour ne pas présenter de degré de liberté axial. L'assemblage ainsi obtenu est alors isostatique.

Par contre, si le réducteur comporte des paliers tonneaux, le joint de transmission homocinétique à billes est avantageusement un joint double-offset ou à pistes croisées, une liaison cannelée coulissante entre la couronne et le carter (non représentée) devant alors être prévue pour supprimer le degré de liberté supplémentaire conféré par le joint.

## Revendications

1. Dispositif de réduction épicycloïdal (30, 70) pour l'entraînement en rotation d'au moins un premier ensemble de pales d'une turbomachine, comprenant :
un planétaire (32, 74) centré sur un axe longitudinal (12) de la turbomachine et apte à être relié à un rotor (28, 76) de la turbomachine pour être entraîné en rotation ;
au moins un satellite (34, 78) engrenant avec ledit planétaire ;
un porte-satellites (36, 80) portant de manière rotative ledit au moins un satellite et apte à être relié au dit au moins un premier ensemble de pales (25a, 82) pour l'entraîner en rotation ; et
une couronne (38, 72) engrenant ledit au moins un satellite;
**caractérisé en ce qu'**il comporte en outre un premier joint de transmission homocinétique à billes (44, 84) et **en ce que** ledit planétaire est apte à être relié audit rotor de la turbomachine au travers dudit premier joint de transmission homocinétique à billes.

2. Dispositif selon la revendication 1, dans lequel ledit premier joint de transmission homocinétique à billes est choisi parmi l'un des suivants : joint Rzeppa, joint Weiss, joint à pistes croisées, joint double-offset.

3. Dispositif selon la revendication 1, dans lequel ledit premier joint de transmission homocinétique à billes comprend une première extrémité munie d'une bride (50, 88) s'étendant radialement vers l'extérieur, et une seconde extrémité opposée à ladite première extrémité et munie d'une portion annulaire (44a, 84a) montée autour dudit planétaire par un système de cannelures (48, 86).

4. Dispositif selon la revendication 3, dans lequel ladite bride dudit premier joint de transmission homocinétique à billes est apte à être fixée sur un arbre d'entraînement flexible (28a, 76) dudit rotor de la turbomachine par l'intermédiaire d'une pluralité de liaisons boulonnées (52, 90).

5. Dispositif selon la revendication 1, dans lequel ladite couronne est apte à être reliée à un second ensemble de pales (25b) au travers d'un second joint de transmission homocinétique à billes (46).

6. Dispositif selon la revendication 5, dans lequel lesdits premier ou second ensembles de pales appartiennent à une simple ou double hélice d'un turbopropulseur ou à une simple ou double soufflante d'un turboréacteur.

7. Dispositif selon la revendication 5, dans lequel ledit second joint de transmission homocinétique à billes est choisi parmi l'un des suivants : joint Rzeppa, joint Welss, joint à pistes croisées, joint double-offset.

8. Dispositif selon la revendication 5 ou la revendication 6, dans lequel ledit second joint de transmission homocinétique à billes comprend une première extrémité munie d'une bride s'étendant radialement vers l'extérieur et une seconde extrémité opposée à ladite première extrémité et munie d'une bride s'étendant radialement vers l'intérieur et apte à être fixée à un arbre d'entrainement flexible (40) dudit second ensemble de pales par l'intermédiaire d'une pluralité de liaisons boulonnées (56).

9. Dispositif selon la revendication 8, dans lequel ledit arbre d'entrainement flexible dudit second ensemble de pales est monté à l'intérieur d'un arbre d'entrainement raide (42) dudit premier ensemble de pales apte à être fixé au dit porte-satellites.

10. Dispositif selon l'une quelconque des revendications 1 à 9, dans lequel ledit planétaire, ledit au moins un satellite et ladite couronne sont chacun dédoublés axialement et comprennent des roues hélicoïdales montées en opposition (dite en double hélice) de façon à annuler la poussée axiale induite.

## Patentansprüche

1. Planetenuntersetzungsvorrichtung (30, 70) zum Drehantreiben wenigstens einer ersten Anordnung von Schaufeln einer Turbomaschine, umfassend
ein Sonnenrad (32, 74), das um eine Längsachse (12) der Turbomaschine zentriert und geeignet ist, mit einem Rotor (28, 76) der Turbomaschine verbunden zu werden, um drehangetrieben zu werden,
wenigstens ein Satellitenrad (34, 78), das mit dem Sonnenrad in Eingriff steht,
einen Planetenträger (36, 80), der das wenigstens eine Satellitenrad drehbar trägt und geeignet ist, mit der wenigstens einen ersten Anordnung von Schaufeln (25a, 82) verbunden zu werden, um sie drehanzutreiben, sowie
ein Hohlrad (38, 72), das mit dem wenigstens einen Satellitenrad in Eingriff steht,
**dadurch gekennzeichnet, dass** sie ferner ein erstes homokinetisches Kugelgelenk (44, 84) umfasst und dass das Sonnenrad geeignet ist, über das erste homokinetische Kugelgelenk mit dem Rotor der Turbomaschine verbunden zu werden.

2. Vorrichtung nach Anspruch 1, bei der das erste homokinetische Kugelgelenk aus einem der folgenden ausgewählt ist: Gelenk von Rzeppa, Gelenk von Weiss, Gelenk mit gekreuzten Spuren, Double-Offset-Gelenk.

3. Vorrichtung nach Anspruch 1, bei der das erste homokinetische Kugelgelenk ein erstes Ende, das mit einem sich radial nach außen erstreckenden Flansch (50, 88) versehen ist, und ein zweites Ende aufweist, das dem ersten Ende gegenüberliegt und mit einem ringförmigen Abschnitt (44a, 84a) versehen ist, der über ein Rillensystem (48, 86) um das Sonnenrad herum angebracht ist.

4. Vorrichtung nach Anspruch 3, bei der der Flansch des ersten homokinetischen Kugelgelenks geeignet ist, mittels einer Vielzahl von Bolzenverbindungen (52, 90) an einer flexiblen Antriebswelle (28a, 76) des Rotors der Turbomaschine befestigt zu werden.

5. Vorrichtung nach Anspruch 1, bei der das Hohlrad geeignet ist, über ein zweites homokinetisches Kugelgelenk (46) mit einer zweiten Anordnung von Schaufeln (25b) verbunden zu werden.

6. Vorrichtung nach Anspruch 5, bei der die erste oder die zweite Anordnung von Schaufeln zu einem Einzel- oder Doppelpropeller eines Turboprop-Triebwerks oder zu einem Einzel- oder Doppelgebläse eines Turbostrahltriebwerks gehört.

7. Vorrichtung nach Anspruch 5, bei der das zweite homokinetische Kugelgelenk aus einem der folgenden ausgewählt ist: Gelenk von Rzeppa, Gelenk von Weiss, Gelenk mit gekreuzten Spuren, Double-Offset-Gelenk.

8. Vorrichtung nach Anspruch 5 oder Anspruch 6, bei der das zweite homokinetische Kugelgelenk ein erstes Ende, das mit einem sich radial nach außen erstreckenden Flansch versehen ist, und ein zweites Ende aufweist, das dem ersten Ende gegenüberliegt und mit einem Flansch versehen ist, der sich radial nach innen erstreckt und geeignet ist, über eine Vielzahl von Bolzenverbindungen (56) mit einer flexiblen Antriebswelle (40) der zweiten Anordnung von Schaufeln verbunden zu werden.

9. Vorrichtung nach Anspruch 8, bei der die flexible Antriebswelle der zweiten Anordnung von Schaufeln innerhalb einer starren Antriebswelle (42) der ersten Anordnung von Schaufeln angebracht ist, die geeignet ist, an dem Planetenträger befestigt zu werden.

10. Vorrichtung nach einem der Ansprüche 1 bis 9, bei der das Sonnenrad, das wenigstens eine Satellitenrad und das Hohlrad jeweils axial geteilt sind und Schneckenräder umfassen, die entgegengesetzt (als sogenannte Doppelhelix) angebracht sind, um den bewirkten Axialschub aufzuheben.

## Claims

1. An epicyclic gear device (30, 70) for driving rotation of at least a first blade set of a turbine engine, the device comprising:
• a sunwheel (32, 74) centered on a longitudinal axis (12) of the turbine engine and suitable for being connected to a rotor (28, 76) of the turbine engine in order to be driven in rotation;
• at least one planet (34, 78) meshing with said sunwheel;
• a planet carrier (36, 80) rotatably carrying said at least one planet and suitable for being connected to said at least one first blade set (25a, 82) in order to drive it in rotation; and
• a ring (38, 72) meshing with said at least one planet;
the device being **characterized in that** it further comprises a first constant velocity ball transmission joint (44, 84) and that said sunwheel is suitable for being connected to said rotor of the turbine engine via said first constant velocity ball transmission joint.

2. A device according to claim 1, wherein said first constant velocity ball transmission joint is a joint selected from the following: a Rzeppa joint, a Weiss joint, a plunging joint, a double-offset joint.

3. A device according to claim 1, wherein said first constant velocity ball transmission joint has a first end provided with a flange (50, 88) extending radially outwards, and a second end opposite from said first end and provided with an annular portion (44a, 84a) mounted around said sunwheel by a system of fluting (48, 86).

4. A device according to claim 3, wherein said flange of said first constant velocity ball transmission joint is suitable for being fastened to a flexible drive shaft (28a, 76) of said rotor of the turbine engine via a plurality of bolted connections (52, 90).

5. A device according to claim 1, wherein said ring is suitable for being connected to a second blade set (25b) via a second constant velocity ball transmission joint (46).

6. A device according to claim 5, wherein said first or second blade sets belong to one or two propellers of a turboprop or to one or two fans of a turbojet.

7. A device according to claim 5, wherein said second constant velocity ball transmission joint is a joint selected from the following: a Rzeppa joint, a Weiss joint, a plunging joint, a double-offset joint.

8. A device according to claim 5 or claim 6, wherein said second constant velocity ball transmission joint has a first end provided with a flange extending radially outwards and a second end opposite from said first end and provided with a flange extending radially inwards and suitable for being fastened to a flexible drive shaft (40) of said second blade set via a plurality of bolted connections (56).

9. A device according to claim 8, wherein said flexible drive shaft of said second blade set is mounted inside a stiff drive shaft (42) of said first blade set that is suitable for being fastened to said planet carrier.

10. A device according to any one of claims 1 to 9, wherein said sunwheel, said at least one planet, and said ring are each doubled up axially and comprises helical wheels mounted in opposition (in a double helix configuration) so as to cancel the induced axial thrust.
